# EUROPÄISCHE PATENTSCHRIFT

(11) **EP 1 071 200 B1**
(45) Veröffentlichungstag und Bekanntmachung des Hinweises auf die Patenterteilung: **08.04.2009**
(21) Anmeldenummer: 00114830.3
(22) Anmeldetag: 11.07.2000
(51) Int. Cl.: H02P 6/20, H02P 6/00, H02P 8/10

(54) **Elektronisch kommutierbarer Motor**
Electronically commutatable motor
Moteur électroniquement commutable

(30) Priorität: 23.07.1999 DE 19934668
(43) Veröffentlichungstag der Anmeldung: 24.01.2001
(73) Patentinhaber: ROBERT BOSCH GMBH, 70442 Stuttgart (DE)
(72) Erfinder: Heinkel, Hans-Martin, 70199 Stuttgart (DE); Knecht, Gerhard, 76473 Iffezheim (DE); Berger, Rainer Josef, 42859 Remscheid (DE)

(56) Entgegenhaltungen:
- DE-A- 19 721 282
- GB-A- 1 579 121
- US-A- 4 114 073
- US-A- 5 814 957

## Beschreibung

### Stand der Technik

Die Erfindung betrifft einen elektronisch kommutierbaren Motor, dessen Erregerwicklungen über Halbleiter-Endstufen von einer elektronischen Steuereinheit mittels pulsweitenmodulierter Steuersignale bestrombar sind und dabei im Stator des Motors ein Drehfeld erzeugen, das den Dauermagnet-Rotor des Motors in Drehbewegungen versetzt.

Solche Motoren sind aus den Dokumenten DE 19721282, US 5 814 957, GB 1 579 121 und US 4 114 073 bekannt.

Bei elektronisch kommutierbaren Motoren ist es erforderlich, die Stellung des Dauermagnet-Rotors zu dem mit Erregerwicklungen versehenen Stator zu kennen, damit mit der vorgesehenen Kommutierung der Erregerwicklungen der Motor beim Start in der gewünschten Drehrichtung in Drehbewegungen versetzt wird.

Es sind derartige Motoren mit Lagesensoren bekannt, mit denen die Stellung des abgeschalteten Motors erkennbar gemacht wird. Diese Motoren erfordern nicht nur zusätzliche Lagesensoren, sie bedingen auch einen zusätzlichen Auf-wand in der PWM-Steuereinheit.

Bei Motoren ohne Lagesensoren wird die Stellung zwischen Rotor und Stator durch Auswertung von in den Erregerwicklungen induzierten Spannungen erkannt. Da bei Stillstand des Motors jedoch keine auswertbaren Spannungen induziert werden, ist eine Lageerkennung im Stillstand des Motors nicht möglich. Bei einem Start der Bestimmung ist daher ein Anlaufen des Motors nicht sichergestellt, insbesondere nicht in der gewünschten Drehrichtung.

Wie die US 5,327,053 zeigt, kann ein elektronisch kommutierbarer Motor ohne Lagersensoren auch in der richtigen Drehrichtung gestartet werden, wenn in der Startphase durch abweichende Bestromung der Erregerwicklungen erst eine bestimmte Stellung zwischen Rotor und Stator hergestellt und danach erst mit der üblichen Bestromung begonnen wird. Dabei werden zu Beginn zwei Erregerwicklungen gleichzeitig voll bestromt und danach erfolgt die zur Erzeugung des Drehfeldes mit der gewünschten Drehrichtung erforderliche Bestromung.

Dabei hat sich jedoch gezeigt, dass diese Ansteuerung in der Startphase ein relativ geringes Massenträgheitsmoment des Rotors, ein hohes Rastmoment und ein stark bedämpftes System voraussetzt. Dieses bekannte Startverfahren ist daher für Motoren, die diese Eigenschaften nicht aufweisen, nicht mit Erfolg übertragbar.

Es ist daher Aufgabe der Erfindung, bei einem elektronisch kommutierbaren Motor der eingangs erwähnten Art mit hohem Massenträgheitsmoment, kleinem Rastmoment und schlechter Bedämpfung auch ohne Lagesensoren beim Start einen Anlauf in der gewünschten Drehrichtung sicher zu stellen.

Diese Aufgabe wird durch die Merkmale des Anspruchs 1 gelöst.

In den Steuerphasen werden die Erregerwicklungen mittels der Halbleiter-Endstufen mit einer Schaltfrequenz der PWM-Steuersignale bestromt, wobei das Pulsweitenverhältnis PWV - Verhältnis Pulsweite zu Periodendauer - von einem Minimum auf ein Maximum ansteigt und dann wieder zum Minimum abfällt. Da sich die Steuerphasen der Erregerwicklungen überlappen, wird auch das Drehmoment moduliert und durch Anpassung der sich überlappenden Bereiche der Steuerphasen der Erregerwicklungen läßt sich in der Startphase ein annähernd gleichförmiger Momentenverlauf in der gewünschten Drehrichtung erreichen, der zu einem sicheren Anlauf in der richtigen Drehrichtung führt. Die Erhöhung der Drehzahl in der Startphase wird durch Verkürzung der Kommutierungszeit erreicht, was in der Startphase kontinuierlich erfolgt. Die Kommutierungszeit hängt von den Motorparametern ab und wird entsprechend angepaßt.

Nach einer Ausgestaltung kann sich die Änderung des Pulsweitenverhältnisses in den Steuerphasen so vollziehen, dass das Pulsweitenverhältnis in den Steuerphasen vom Wert "0" auf den Wert "1" zunimmt und wieder auf den Wert "0" abnimmt, wobei das Pulweitenverhältnis als Verhältnis von Pulsweite zu Periodendauer des PWM-Steuersignals definiert ist, sowie dass sich das Pulsweitenverhältnis in der Startphase der Steuerphasen der PWM-Steuersignale über die Zeit etwa sinusförmig zwischen dem Minimum und dem Maximum ändert.

Die Startphase kann nach einer Ausgestaltung so festgelegt sein, dass sie als Zeitvorgabe gewählt ist, in der der Motor etwa 10 Umdrehungen ausführt.

Ein sanfter und schneller Anlauf des Motors wird nach der Erfindung dadurch erreicht, dass die Kommutierungsfrequenz in der Startphase mit zunehmender Zeit überproportional ansteigt.

Ist nach einer weiteren Ausgestaltung vorgesehen, dass die Amplitude des Pulsweitenverhältnisses in der Startphase kontinuierlich zunimmt und im Dauerlauf des Motors auf einen Wert übergeht, der durch einen der Steuereinheit zugeführten Sollwert vorgegeben ist, dann kann der Motor mit unterschiedlichen Drehzahlen im Dauerlauf betrieben werden, wobei im Nennbetrieb mit Volllast das Pulsweitenverhältnis PWV den Wert "1" annimmt.

Die Anpassung der sich überlappenden Bereiche aufeinander folgender Steuerphasen zum Erreichen eines gleichmäßigen Momentenverlaufs wird dadurch erleichtert, dass die Überlappung zeitlich aufeinander folgender Steuerphasen kleiner ist als die halbe Dauer der Steuerphasen.

In den Steuerphasen werden die PWM-Steuersignale mit einer Schaltfrequenz von z.B. 20 kHZ getaktet.

Die Erfindung wird anhand eines in den Zeichnungen dargestellten Ausführungsbeispeles näher erläutert. Es zeigen:
- Fig. 1: einen 2-strängigen, 4-pulsigen Motor,
- Fig. 2: schematisch die Ansteuerung der vier Erregerwicklungen des Mo- tors nach Fig. 1,
- Fig. 3: den Verlauf der Amplitude des Pulsweitenverhältnisses der PWM- Steuersignale in der Startphase,
- Fig. 4: die zeitlich versetzten Steuerphasen für die vier Erregerwicklungen des Motors nach Fig. 1 und
- Fig. 5: den Verlauf der Kommutierungsfrequenz in der Startphase des Motors.

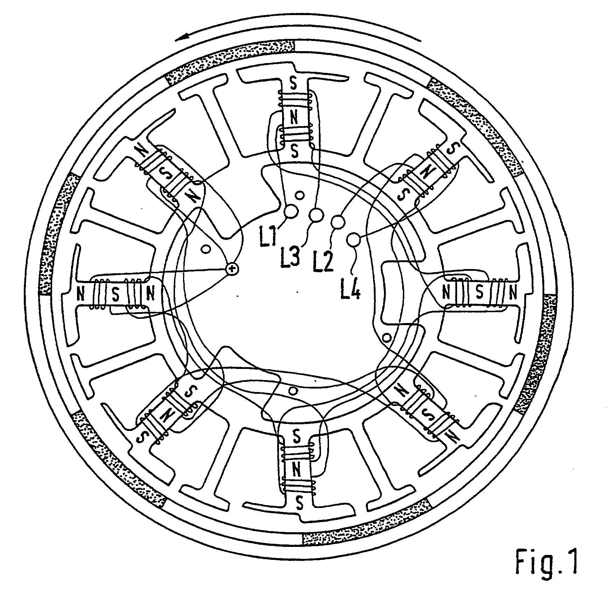

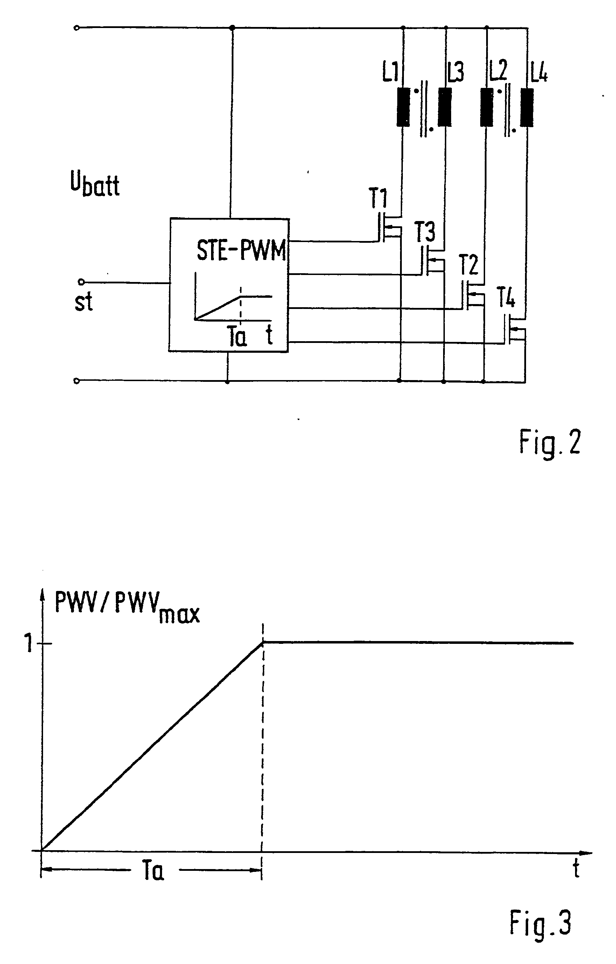

Der Aufbau eines 2-strangigen, 4-pulsigen Motors ist in Fig. 1 dargestellt. Dabei ist zur Erzeugung eines Drehfeldes im Stator für die durch den Pfeil angezeigte Drehrichtung eine Steuereinheit STE-PWM erforderlich, wie Fig. 2 zeigt.

Der Stator weist acht Pole auf, zwischen denen jeweils ein nicht bewickelter Zwischenpol angeordnet ist. Die Erregerwicklungen L1, L2, L3 und L4 sind, wie aus Fig. 1 erkennbar ist, jeweils mit vier Teilwicklungen versehen, die auf vier Pole verteilt sind. Dabei wechselt der Wickelsinn von Teilwicklung zu Teilwicklung und die Teilwicklungen einer Erregerwicklung sind auf Pole verteilt, zwischen denen jeweils ein nicht davon belegter Pol angeordnet ist. Hinzu kommt, dass die Erregerwicklungen L1 und L3 bzw. L2 und L4 dieselben Pole erfassen, jedoch auf jedem Pol jeweils gegenläufige Wickelsinne aufweisen.

Werden diese Erregerwicklungen L1 bis L4 zeitlich nacheinander von der Steuereinheit STE-PWM bestimmt, dann entsteht das gewünschte Drehfeld im Stator.

Wie das Schaltbild nach Fig. 2 zeigt, werden die Erregerwicklungen L1 bis L4 über die Halbleiter-Endstufen T1, T2, T3 und T4 ein- und ausgesachaltet, d.h. mit der Versorgungsgleichspannung U_{batt} verbunden und von dieser getrennt.

Wie in der Steuereinheit STE-PWM durch ein Diagramm angedeutet ist, erfolgt die Ansteuerung beim Start des Motors mit einer Startphase Ta, die sich über eine vorgegebene oder vorgebbare Zeit erstreckt.

In der Startphase Ta nimmt die Amplitude des Pulsweitenverhältnisses PWV kontinuierlich zu. Das Pulsweitenverhältnis PWV gibt das Verhältnis Pulsweite zur Periodendauer der Schaltfrequenz der PWM-Steuersignale an und damit ist die Amplitude mit PWV/PWMₘₐₓ definiert. Nach der Startphase Ta nimmt die Amplitude den Wert "1" an, wenn diese dem Nennbetrieb des Motors bei Volllast zugeordnet ist.

Wird der Steuereinheit STE-PWM ein Sollwert st vorgegeben, der einer Drehzahl zugeordnet ist, dann kann der Motor durch entsprechende Anpassung der Amplitude des Pulsweitenverhältnisses PWV und/oder der Pulsweite in den Schaltperioden mit unterschiedlichen Drehzahlen betrieben werden.

Der Start des Motors und das Hochlaufen auf die Nenndrehzahl wird dadurch sichergestellt, dass den vier Halbleiter-Endstufen T1 bis T4 vier sich überlappende Steuerphasen zugeordnet werden, in denen PWM-Steuersignale z.B. mit der Schaltfrequenz von 20 kHZ zugeführt werden. In den Steuerphasen ändert sich das Pulsweitenverhältnis PWV von einem Minimum PWVₘᵢₙ auf ein Maximum PWVₘₐₓ und fällt wieder auf das Minimum PWVₘᵢₙ ab. Der zeitliche Versatz der Steuerphasen ist als Kommutierungszeit K-Zeit gekennzeichnet und bestimmt die Kommutierungsfrequenz fk und damit die Drehzahl des Motors.

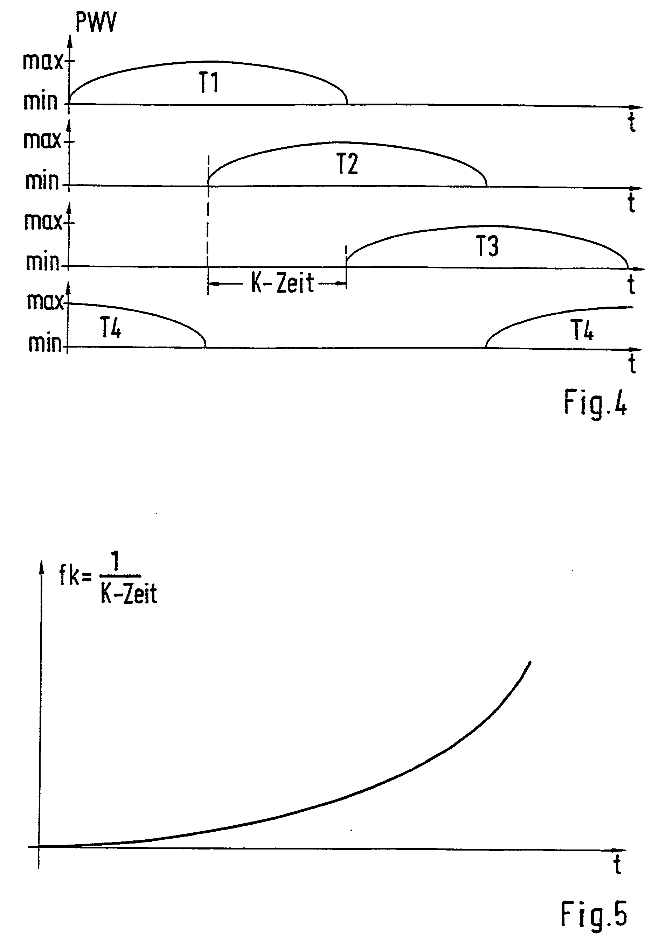

Die überlappenden Bereiche der Steuerphasen sind im Pulsweitenverhältnis PWV so aufeinander abgestimmt, dass in der Startphase Ta stets ein etwa gleichförmiger Momentenverlauf erreicht wird. Die K-Zeit wird in der Startphase Ta kontinuierlich verkürzt, wie Fig. 5 zeigt, damit der Motor auf die Minimaldrehzahl des Dauerlaufes hochläuft. Dabei nimmt die Kommutierungsfrequenz fk und die Drehzahl mit zunehmender Zeit überproportional zu. Für das Pulsweitenverhältnis PWV kann das Minimum PWVₘᵢₙ den Wert"0" und das Maximum PWVₘₐₓ den Wert "1" annehmen. Der Übergang zwischen diesen Werten kann z.B. annähernd sinusförmig erfolgen und ist auf die Bauart und die Parameter des Motors abzustimmen, um den für den sicheren Start erforderlichen gleichmäßigen Momentenverlauf in der Startphase Ta zu bekommen. Die Startphase Ta kann durch Vorgabe einer Zeit festgelegt werden, in der der Motor eine bestimmte Anzahl von Umdrehungen, z.B. 10, ausführen kann.

Wie die Fig. 4 zeigt, erstreckt sich die Überlappung benachbarter Steuerphasen über die halbe Dauer der Steuerphasen. Dies bedeutet, dass mit der Verkürzung der Kommutierungszeit K-Zeit sich auch die Dauer der Steuerphasen entsprechend verkürzt. In den Steuerphasen bleibt in der Regel die Schaltfrequenz, z.B. 20 kHZ, der PWM-Steuersignale unverändert. Geändert wird in der Regel die Pulsweite. Die Reihenfolge der Steuerphasen beim Start und beim Dauerbetrieb bleibt gleich.

Die Startphase ist als Software in einem Mikrocomputer der Steuereinheit STE-PWM abgelegt.

## Patentansprüche

1. Elektronisch kommutierbarer Motor, dessen Erregerwicklungen (L1, L2, L3, L4) über Halbleiter-Endstufen (T1, T2, T3, T4) von einer elektronischen Steuereinheit (STE-PWM) mittels pulsweitenmodulierter Steuersignale bestrombar sind und dabei im Stator des Motors ein Drehfeld erzeugen, das den Dauermagnet-Rotor des Motors in Drehbewegungen versetzt, wobei beim Start des Motors die Steuereinheit (STE-PWM) während einer vorgegebenen oder vorgebbaren Startphase (Ta) die Halbleiter-Endstufen (T1,T2, T3, T4) in sich überlappenden Steuerphasen mit PWM-Steuersignalen ansteuert, deren Pulsweitenverhältnisse (PWV) von einem Minimum (PWVₘᵢₙ) auf ein Maximum (PWVₘₐₓ) ansteigt und wieder auf das Minimum (PWVₘᵢₙ) abfällt, wobei sich überlappende Bereiche der Steuerphasen in den betroffenen Erregerwicklungen (L1,L2, L3, L4) Ströme erzeugen, die einen annähernd kontinuierlichen Momentenverlauf ergeben, und wobei in der Startphase (Ta) durch Verkürzung der Kommutierungszeit (K-Zeit) zwischen den aufeinander folgenden Steuerphasen die Kommutierungsfrequenz (fk) und damit die Drehzahl des Motors erhöht wird, **dadurch gekennzeichnet, dass** die Kommutierungsfrequenz (fk) in der Startphase (Ta) mit zunehmender Zeit überproportional ansteigt und die Überlappung zeitlich aufeinander folgender Steuerphasen kleiner ist als die halbe Dauer der Steuerphasen.

2. Elektronisch kommutierbarer Motor nach Anspruch 1,
**dadurch gekennzeichnet,**
**dass** das Pulsweitenverhältnis (PWV) in den Steuerphasen vom Wert "0" auf den Wert "1" zunimmt und wieder auf den Wert "0" abnimmt, wobei das Pulweitenverhältnis (PWV) als Verhältnis von Pulsweite zu Periodendauer des PWM-Steuersignals definiert ist.

3. Elektronisch kommutierbarer Motor nach Anspruch 1 oder 2,
**dadurch gekennzeichnet,**
**dass** die Startphase (Ta) als Zeitvorgabe gewählt ist, in der der Motor etwa 10 Umdrehungen ausführt.

4. Elektronisch kommutierbarer Motor nach einem der Ansprüche 1 bis 3,
**dadurch gekennzeichnet,**
**dass** die Amplitude des Pulsweitenverhältnisses (PWV) in der Startphase (Ta) kontinuierlich zunimmt und im Dauerlauf des Motors auf einen Wert übergeht, der durch einen der Steuereinheit (STE-PWM) zugeführten Sollwert (st) vorgegeben ist (Fig. 3).

5. Elektronisch kommutierbarer Motor nach Anspruch 4,
**dadurch gekennzeichnet,**
**dass** im Nennbetrieb mit Volllast das Pulsweitenverhältnis (PWV) der Steuersignale den Wert "1" annimmt.

6. Elektronisch kommutierbarer Motor nach einem der Ansprüche 1 bis 5,
**dadurch gekennzeichnet,**
**dass** sich das Pulsweitenverhältnis (PWV) in der Startphase (Ta) der Steuerphasen der PWM-Steuersignale über die Zeit (Z) etwa sinusförmig zwischen dem Minimum (PWVₘᵢₙ) und dem Maximum (PWMₘₐₓ) ändert.

7. Elektronisch kommutierbarer Motor nach einem der Ansprüche 1 bis 6.
**dadurch gekennzeichnet,**
**dass** die PWM-Steuersignale eine Schaltfrequenz von 20 kHZ aufweisen.

8. Elektronisch kommutierbarer Motor nach einem der Ansprüche 1 bis 7,
**dadurch gekennzeichnet,**
**dass** die Startphase (Ta) mit den Steuerphasen als Software in einem Mikrocomputer der Steuereinheit (STE-PWM) abgelegt ist.

## Claims

1. Electronically commutatable motor whose field windings (L1, L2, L3, L4) can be supplied with power by an electronic control unit (STE-PWM) via semiconductor output stages (T1, T2, T3, T4) by means of pulse-width-modulated control signals and in the process generate a rotary field, which causes the permanent magnet rotor of the motor to rotate, in the stator of the motor, with the control unit (STE-PWM) driving the semiconductor output stages (T1, T2, T3, T4) in overlapping control phases with PWM control signals, whose pulse-width ratio (PWV) rises from a minimum (PWVₘᵢₙ) to a maximum (Pwvₘₐₓ) and falls to the minimum (PWVₘᵢₙ) again, during a prescribed or prescribable start phase (Ta) when the motor is started, with overlapping regions of the control phases generating currents in the field windings (L1, L2, L3, L4) in question, which currents produce an approximately continuous moment profile, and with the commutation frequency (fk) and therefore the rotational speed of the motor being increased in the start phase (Ta) by shortening the commutation time (K time) between the successive control phases, **characterized in that** the commutation frequency (fk) increases disproportionately with an increase in time in the start phase (Ta) and the overlap between chronologically successive control phases is less than half the duration of the control phases.

2. Electronically commutatable motor according to Claim 1, **characterized in that** the pulse-width ratio (PWV) increases from the value "0" to the value "1" and falls to the value "0" again in the control phases, with the pulse-width ratio (PWV) being defined as the ratio of the pulse width to the period duration of the PWM control signal.

3. Electronically commutatable motor according to Claim 1 or 2, **characterized in that** the start phase (Ta) is selected to be a predefined time value in which the motor executes approximately 10 revolutions.

4. Electronically commutatable motor according to one of Claims 1 to 3, **characterized in that** the amplitude of the pulse-width ratio (PWV) increases continuously in the start phase (Ta) and during continuous operation of the motor reaches a value which is prescribed by a setpoint value (st) supplied to the control unit (STE-PWM) (Figure 3).

5. Electronically commutatable motor according to Claim 4, **characterized in that** the pulse-width ratio (PWV) of the control signals assumes the value "1" during rated operation with full load.

6. Electronically commutatable motor according to one of Claims 1 to 5, **characterized in that** the pulse-width ratio (PWV) varies approximately sinusoidally over time (Z) between the minimum (PWVₘᵢₙ) and the maximum (PWVₘₐₓ) in the start phase (Ta) of the control phases of the PWM control signals.

7. Electronically commutatable motor according to one of Claims 1 to 6, **characterized in that** the PWM control signals have a switching frequency of 20 kHz.

8. Electronically commutatable motor according to one of Claims 1 to 7, **characterized in that** the start phase (Ta) is stored with the control phases as software in a microcomputer of the control unit (STE-PWM).

## Revendications

1. Moteur électroniquement commutable dont les bobinages d'excitation (L1, L2, L3, L4) peuvent être alimentés en courant par l'intermédiaire d'étages de sortie semi-conducteurs (T1, T2, T3, T4) d'une unité de commande électronique (STE-PWM) au moyen de signaux de commande modulés en largeur d'impulsion et produisent alors, dans le stator du moteur, un champ rotatif qui met le rotor à aimant permanent du moteur en rotation, l'unité de commande (STE-PWM), lors du démarrage du moteur, commandant les étages de sortie semi-conducteurs (T1, T2, T3, T4), pendant une phase de démarrage (Ta) prédéfinie ou prédéfinissable, dans des phases de commande qui se chevauchent, avec des signaux de commande PWM dont les rapports de largeur d'impulsion (PWV) passent d'un minimum (PWVₘᵢₙ) à un maximum (PWVₘₐₓ) et repassent au minimum (PWVₘᵢₙ), avec des zones qui se chevauchent des phases de commande en produisant dans les bobinages d'excitation (L1, L2, L3, L4) concernés, des courants qui donnent une évolution des couples approximativement continue, et dont la fréquence de commutation (fk) et ainsi le régime du moteur augmente dans la phase de démarrage (Ta) du fait du raccourcissement du temps de commutation (K-Zeit) entre les phases de commande qui se succèdent,
**caractérisé en ce que**
la fréquence de commutation (fk) augmente d'une manière disproportionnée dans la phase de démarrage (Ta) au fur et à mesure du temps et le chevauchement de phases de commande se succédant dans le temps est inférieur à la demi-durée des phases de commande.

2. Moteur électroniquement commutable selon la revendication 1,
**caractérisé en ce que**
le rapport entre les largeurs d'impulsion (PWV) passe, dans les phases de commande, de la valeur "0" à la valeur "1" et revient à la valeur "0", le rapport entre les largeurs d'impulsion (PWV étant défini en tant que rapport entre la largeur d'impulsion et la durée périodique du signal de commande PWM.

3. Moteur électroniquement commutable selon la revendication 1 ou 2,
**caractérisé en ce que**
la phase de démarrage (Ta) est choisie en tant que consigne de durée pendant laquelle le moteur effectue approximativement 10 rotations.

4. Moteur électroniquement commutable selon l'une quelconque des revendications 1 à 3,
**caractérisé en ce que**
l'amplitude du rapport entre les largeurs d'impulsion (PWV) augmente en continu pendant la phase de démarrage (Ta) et, lorsque le moteur fonctionne en continu, passe à une valeur prédéfinie par une valeur de consigne (st) amenée à l'unité de commande (STE-PWM) (fig. 3).

5. Moteur électroniquement commutable selon la revendication 4,
**caractérisé en ce que**
en mode nominal à pleine charge, le rapport entre les largeurs d'impulsion (PWV) des signaux de commande prend la valeur "1".

6. Moteur électroniquement commutable selon l'une quelconque des revendications 1 à 5,
**caractérisé en ce que**
le rapport entre les largeurs d'impulsion (PWV) évolue dans le temps (Z) de manière approximativement sinusoïdale entre le minimum (PWVₘᵢₙ) et le maximum (PWMₘₐₓ) dans la phase de démarrage (Ta) des phases de commande des signaux de commande PWM.

7. Moteur électroniquement commutable selon l'une quelconque des revendications 1 à 6,
**caractérisé en ce que**
les signaux de commande PWM présentent une fréquence de commutation de 20 kHz.

8. Moteur électroniquement commutable selon l'une quelconque des revendications 1 à 7,
**caractérisé en ce que**
la phase de démarrage (Ta) est sauvegardée, avec les phases de commande, en tant que logiciel dans un microordinateur de l'unité de commande (STE-PWM).
